# EUROPÄISCHE PATENTSCHRIFT

(11) **EP 1 221 003 B1**
(45) Veröffentlichungstag und Bekanntmachung des Hinweises auf die Patenterteilung: **10.12.2003**
(21) Anmeldenummer: 00972730.6
(22) Anmeldetag: 11.10.2000
(51) Int. Cl.: F16H 37/02

(54) **STUFENLOS VERSTELLBARES FAHRZEUGGETRIEBE**
CONTINUOUSLY VARIABLE VEHICLE TRANSMISSION
TRANSMISSION A VARIATION CONTINUE

(30) Priorität: 16.10.1999 DE 19950053
(43) Veröffentlichungstag der Anmeldung: 10.07.2002
(73) Patentinhaber: ZF FRIEDRICHSHAFEN Aktiengesellschaft, 88038 Friedrichshafen (DE)
(72) Erfinder: GUMPOLTSBERGER, Gerhard, 88045 Friedrichshafen (DE)
(86) Internationale Anmeldenummer: EP0009990
(87) Internationale Veröffentlichungsnummer: WO01029451

(56) Entgegenhaltungen:
- EP-A- 0 199 533
- EP-A- 0 787 927
- DE-A- 19 858 553

## Beschreibung

Die Erfindung betrifft ein stufenlos verstellbares Fahrzeuggetriebe mit einem Variator, beispielsweise einem Reibradgetriebe oder einem Kegelscheiben-Umschlingungsgetriebe, zur stufenlosen Übersetzungsverstellung und einem mehrstufigen Schaltgetriebe mit mindestens einer Eingangs- und einer Ausgangswelle und mit mindestens zwei Vorwärtsgängen und mindestens einem Rückwärtsgang, wie aus gaktungsbildenden EP 787 927 A und EP 199 533 A bekannt.

Eine ähnliche Anordnung ist aus der DE 198 58 553 der Anmelderin bekannt. Diese offenbart eine Kombination aus einem Variator, einem Planetengetriebe sowie einem nachgeschalteten Differential, welches die Antriebsleistung auf zwei Antriebswellen verteilt. Dabei erfolgt eine Leistungsverzweigung hinter dem Getriebeeingang über einen ersten Leistungszweig zu dem Variator sowie über einen zweiten Leistungszweig und eine weitere Übersetzungsstufe zu dem Planetengetriebe.

Derartige Fahrzeuggetriebe sind aus dem Stand der Technik auch allgemein bekannt, wobei dem stufenlosen Getriebe, beispielsweise einem Umschlingungsgetriebe, ein Planetengetriebe nachgeschaltet ist. Diese Planetengetriebe sind üblicherweise über zwei weitere Stirnradstufen mit dem Achsdifferential eines Kraftfahrzeuges verbunden, da die Eingangs- und die Ausgangswelle des Planetengetriebes für den Vorwärtsfahrbereich dieselbe positive Drehrichtung aufweisen und die positive Drehrichtung über die zwischengeschalteten Stirnradstufen derart weitergeleitet wird, so daß die mit dem Achsdifferential verbundenen Antriebsachsen bei Vorwärtsfahrt des Kraftfahrzeugs ebenfalls eine positive Drehrichtung ausführen.

Derartige Fahrzeuggetriebe unterliegen einer ständigen Weiterentwicklung hinsichtlich Verringerung des Bauaufwandes bzw. Erhöhung des Komforts für den Benutzer eines mit einem derartigen Getriebe ausgestatteten Kraftfahrzeugs.

Es ist daher Aufgabe der vorliegenden Erfindung, eine Ausbildung eines Fahrzeuggetriebes anzugeben, welche zum einen einen geringeren Bauaufwand und zum anderen eine Erhöhung des Komforts für den Fahrer eines mit einem derartigen Getriebe versehenen Fahrzeugs ermöglicht. Ferner soll die Zuverlässigkeit bzw. die Lebensdauer des Getriebes erhöht werden.

Erfindungsgemäß wird diese Aufgabe durch ein stufenlos verstellbares Fahrzeuggetriebe nach den Merkmalen des Anspruchs 1 gelöst.

Es wird vorgeschlagen, daß in einem gattungsgemäßen Fahrzeuggetriebe zwischen der Eingangs- und der Ausgangswelle des mehrstufigen Schaltgetriebes durch die mindestens zwei Vorwärtsgänge eine Drehrichtungsumkehr erfolgt und daß der mindestens eine Rückwärtsgang ohne Drehrichtungsumkehr zwischen der Eingangs- und der Ausgangswelle des Schaltgetriebes ausgebildet ist. Dadurch wird erstens erreicht, daß vorteilhafterweise ein geringerer Bauaufwand gegenüber den bekannten Fahrzeuggetrieben mit zwei Fahrbereichen erforderlich ist. Durch die Drehrichtungsumkehr innerhalb des Schaltgetriebes zwischen der Eingangs- und der Ausgangswelle wird die bislang übliche doppelte Stirnradstufe zwischen dem Schaltgetriebe und dem nachgeschalteten Achsdifferential auf eine einfache Stirnradstufe reduziert. Durch die Erfindung wird zweitens eine Lösung vorgeschlagen, welche eine geringere Variatorspreizung bei einer größeren Gesamtspreizung gegenüber Einbereichsgetrieben ermöglicht. Außerdem ist eine optimale Variatordrehzahl in den Hauptfahrbereichen möglich, wobei diese beispielsweise in einen City- und einen Überland-Bereich unterteilt werden.

In einer besonders vorteilhaften Weiterbildung der Erfindung wird vorgeschlagen, daß als Variator insbesondere ein Kegelscheiben-Umschlingungsgetriebe oder ein zweizügiges Reibradgetriebe vorgesehen ist, wobei die Variatoreingangsund die -ausgangswellen dieselbe Drehrichtung aufweisen und dem mehrstufigen Schaltgetriebe eine Vorrichtung zur Drehrichtungsumkehr, beispielsweise eine einfache Stirnradstufe mit einer Drehzahlübersetzung, nachgeschaltet ist. Dadurch wird die negative Drehrichtung der Ausgangswelle des Schaltgetriebes, bei Vorwärtsfahrt des Kraftfahrzeugs, zum einen umgekehrt in eine positive Drehrichtung und zum anderen wird durch diese Stirnradstufe gleichzeitig eine Drehzahlübersetzung ermöglicht.

Die Wellen des Variators sowie des mehrstufigen Schaltgetriebes als auch die mit dem Achsdifferential verbundenen Radachsen sind parallel zueinander und nebeneinander angeordnet. Dadurch wird vorteilhafterweise eine kompakte Bauweise ermöglicht.

In einer weiteren vorteilhaften Ausbildung der Erfindung wird vorgeschlagen, daß der Variator insbesondere als einzügiges Reibradgetriebe ausgebildet ist, wobei in dem Variator zwischen der Eingangs- und der Ausgangswelle eine Drehrichtungsumkehr erfolgt. Eine derartige Anordnung ist vorteilhafterweise für Fahrzeuge mit geringerem Leistungsbereich geeignet.

Vorteilhafterweise sind die Wellen des einzügigen Variators sowie des mehrstufigen Schaltgetriebes koaxial zueinander und hintereinander angeordnet, so daß die Radachse des nachgeschalteten Achsdifferentials rechtwinklig zur Eingangswelle verläuft.

Die Eingangs- und die Ausgangswellen des Schaltgetriebes sind vorteilhafterweise koaxial zueinander und ein- oder beidseitig des Gehäuses des Schaltgetriebes angeordnet. Damit ist eine Anpassung des Schaltgetriebes an die unterschiedlichsten Einbaubedingungen in einem Kraftfahrzeug auf einfache Weise möglich.

Vorteilhafterweise ist das mehrstufige Schaltgetriebe als Planetengetriebe ausgebildet, wobei vorteilhafterweise auch eine Schaltkupplung des mehrstufigen Schaltgetriebes als Anfahrkupplung ausgebildet sein kann. Alternativ kann auch eine externe Kupplung, beispielsweise eine nasse Anfahrkupplung oder eine trockene Reibkupplung, ein hydrodynamischer Wandler oder auch ein sonstiges Anfahrelement, wie z. B. eine Magnetpulverkupplung, ein E-Motor oder ähnliches, verwendet werden.

Vorteilhafterweise ist das mehrstufige Schaltgetriebe lastschaltbar ausgebildet, so daß eine Lastschaltung ohne Zugkraftunterbrechung mittels Lamellenkupplungen erfolgen kann. Alternativ kann jedoch auch eine Schaltung mit Zugkraftunterbrechung, mit Synchronisierungen oder auch mit einer Klauenkupplung erfolgen.

Das Übersetzungsverhältnis des Rückwärtsgangs ist vorteilhafterweise ungleich eins und beträgt insbesondere ca. drei, so daß eine Gesamt- bzw. Anfahrübersetzung des erfindungsgemäßen Fahrzeuggetriebes von ca. fünfzehn erreicht wird. Die beiden Vorwärtsfahrbereiche des Fahrzeuggetriebes sind derart ausgebildet, daß diese einen Beschneidungsbereich aufweisen, so daß sich ein "City-Bereich" und ein "Überland-Bereich" verwirklichen lassen. Durch diese Überlappung der Bereiche kann ein zu häufiges Umschalten der Bereiche vorteilhafterweise verhindert werden und es wird eine jederzeit optimale Variatordrehzahl in den Hauptfahrbereichen ermöglicht.

Vorteilhafterweise ist vorgesehen, ein Wechsel des Fahrbereichs als Gruppenschaltung auszuführen, so daß gleichzeitig eine Stufenschaltung in dem mehrstufigen Schaltgetriebe und eine Übersetzungsverstellung des Variators erfolgt. Damit wird vorteilhafterweise bei einer Schaltung beispielsweise von dem ersten zum zweiten Bereich eine Schaltung durchgeführt, wobei die Gesamtübersetzung des Fahrzeuggetriebes konstant bleibt.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind. Dabei bilden alle beschriebenen und/oder auch bildlich dargestellten Merkmale für sich oder in beliebiger sinnvoller Kombination den Gegenstand der Erfindung, unabhängig von ihrer Zusammenfassung in den Ansprüchen und deren Rückbeziehung.

Es zeigen:
Fig. 1 ein stufenlos verstellbares Fahrzeuggetriebe mit einem Umschlingungsgetriebe und einem nachgeordneten Schaltgetriebe in schematischer Darstellung;
Fig. 2 ein stufenlos verstellbares Fahrzeuggetriebe mit einem zweizügigen Reibradgetriebe und einem nachgeordneten Schaltgetriebe in schematischer Darstellung;
Fig. 3 ein stufenlos verstellbares Fahrzeuggetriebe mit einem einzügigen Reibradgetriebe und einem nachgeordneten Schaltgetriebe sowie einem Achsdifferential;
Fig. 4 ein Getriebe, ähnlich der Darstellung in Fig. 1, jedoch mit detaillierter, schematischer Darstellung des Planetengetriebes;
Fig. 5 das Schaltschema für ein Planetengetriebe gemäß der Darstellung in Fig. 4 und
Fig. 6 eine graphische Darstelllung der Variatorübersetzung zur Gesamtübersetzung für die drei Fahrbereiche.

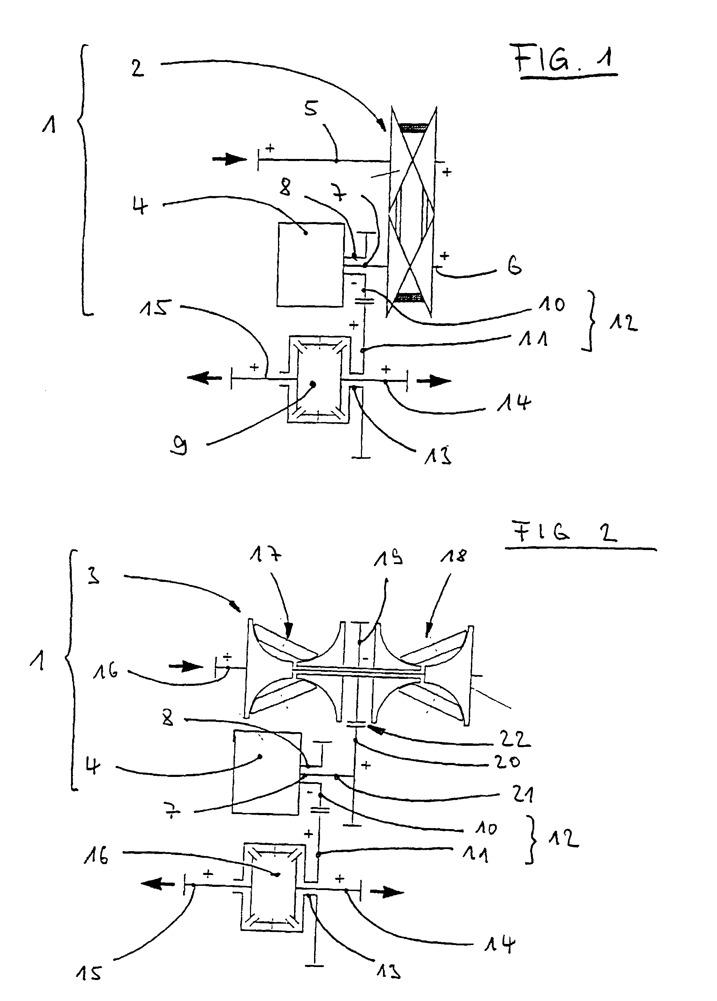

Das stufenlose Fahrzeuggetriebe 1 (Fig. 1) besteht aus einem Umschlingungsgetriebe 2 als Variator sowie einem diesem nachgeordneten mehrstufigen Schaltgetriebe 4, welches insbesondere als Planetengetriebe ausgebildet ist. Dieses stufenlose Getriebe ist über eine Stirnradstufe 12 mit einem nachgeordneten Achsdifferential 9 zum Antrieb der Radchsen 14, 15 eines Kraftfahrzeugs verbunden.

Die Antriebsleistung (in Fig. 1 durch die Pfeile dargestellt) wird von der Eingangswelle 5 über den Variator 2 zur Variator-Ausgangswelle 6 übertragen; diese stellt gleichzeitig die Eingangswelle 7 des Schaltgetriebes 4 dar. Die positive Drehrichtung der Eingangswelle 5 des Variators 2 bleibt positiv bis zur Eingangswelle 7 des Schaltgetriebes. In dem Schaltgetriebe 4 erfolgt in den Vorwärtsfahrbereichen eine Umkehr der Drehrichtung, so daß die Ausgangswelle 8 des Schaltgetriebes 4 eine negative Drehrichtung aufweist. Diese wird mittels des Ritzels 10 und des Rades 11 wieder in eine positive Drehrichtung umgekehrt und über die Eingangswelle 13 des Achsdifferentials 9 diesem zugeführt. Die Antriebsleistung verläßt bei Vorwärtsfahrt des Kraftfahrzeugs das Achsdifferential 9 über die beiden Radachsen 14, 15 in positiver Drehrichtung.

In den nachfolgenden alternativen Ausbildungsmöglichkeiten der Erfindung werden gleiche Bauteile mit gleichen Bezugszeichen gekennzeichnet, sofern zutreffend. Das zweizügige Reibradgetriebe 3 (Fig. 2) wird über die Eingangswelle 16 in positiver Drehrichtung angetrieben. Über die beiden Reibradeinheiten 17 und 18 erfolgt eine stufenlose Übersetzung auf das zwischen den beiden Reibradeinheiten 17, 18 angeordnete Stirnrad 19, welches eine negative Drehrichtung aufweist. Diese wird über die Stirnradstufe 22 mit dem Stirnrad 20 auf die Ausgangswelle 21 des Variators 3 in positive Drehrichtung umgekehrt. Die Eingangswelle 7 des Schaltgetriebes 4 und die nachgeordneten Bauteile und Drehrichtungen entsprechen wieder der Darstellung und Beschreibung gemäß der Fig. 1.

In den vorbeschriebenen Anordnungsmöglichkeiten des stufenlosen Fahrzeuggetriebes 1, sind die Eingangswelle 5 des Variators 2, die Eingangswelle 7 des Schaltgetriebes 4 sowie die Radachsen 14 und 15 in Drei-Wellen-Bauweise parallel nebeneinander angeordnet. Alternativ dazu ist in Fig. 3 eine Anordnung in Standard-Bauweise angegeben, d. h., die Wellen von der Eingangswelle 5 des Variators 23 bis zur Eingangswelle 13 des Achsdifferentials 9 sind koaxial hintereinander angeordnet. Der Variator 23 (Fig. 3) ist als einzügiges Reibradgetriebe ausgebildet, so daß die positive Drehrichtung der Eingangswelle 5 in eine negative Drehrichtung der Ausgangswelle 6 umgekehrt wird. Die Eingangswelle 7 des Schaltgetriebes 4 dreht somit ebenfalls in negativer Drehrichtung. Erfindungsgemäß wird die Drehrichtung innerhalb des Schaltgetriebes 4 - für die Vorwärtsfahrbereiche - in eine positive Drehrichtung der Ausgangswelle 8 umgekehrt. Diese positive Drehrichtung wird über die Eingangswelle 13 des Achsdifferentials 9 auf die Radachsen 14 und 15 weitergeleitet.

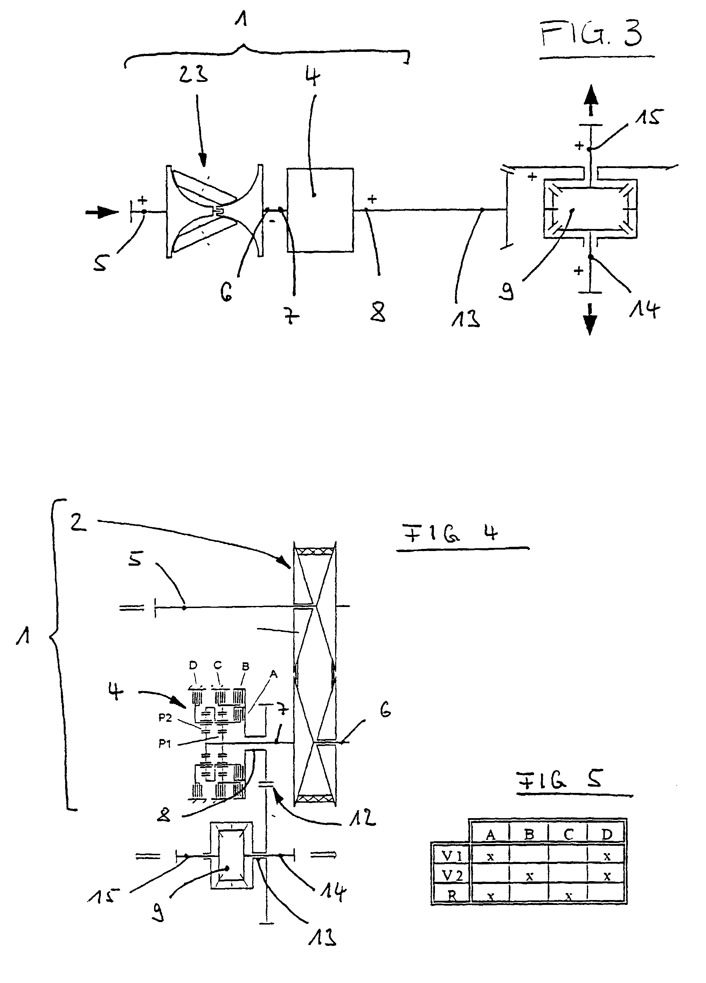

Das Schaltgetriebe 4 (Fig. 4) ist beispielsweise als zweistufiges Planetengetriebe ausgebildet. Dabei sind vier Kupplungen A, B, C, D zur Schaltung der beiden Vorwärtsfahrbereiche V1 und V2 sowie des Rückwärtsfahrbereichs R (Fig. 5) vorgesehen. Für den ersten Vorwärtsfahrbereich V1 sind die Kupplungen A und D geschaltet. Zur Umschaltung von dem ersten in den zweiten Fahrbereich V2 wird die Kupplungen B anstelle A geschaltet. Die Kupplung D bleibt geschlossen. In dem Rückwärtsfahrbereich R sind die Kupplungen A und C geschaltet.

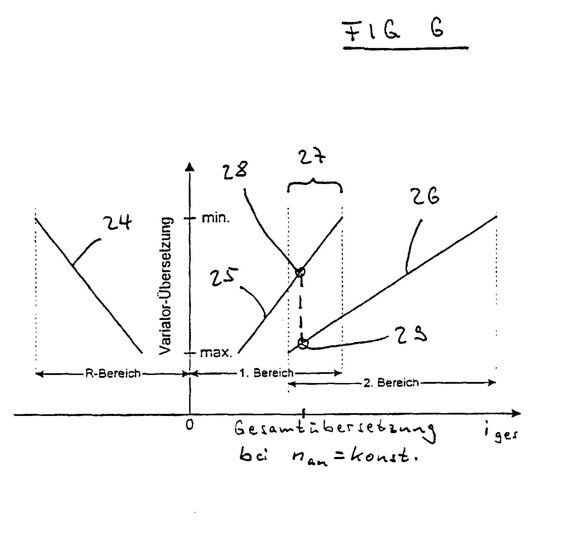

In der Fig. 6 ist die Gesamtübersetzung i_ges des stufenlosen Fahrzeuggetriebes bei einer konstanten Antriebsdrehzahl n_an auf der Abszisse dargestellt. Die Variator-Übersetzung ist auf der Ordinate aufgezeigt. Die Gesamtübersetzung i_ges ist in drei Fahrbereiche aufgeteilt, wobei die negative Gesamtübersetzung von dem Rückwärtsfahrbereich mit der Rückwärtsfahrübersetzung 24 abgedeckt wird. Die positive Gesamtübersetzung in dem Vorwärtsfahrbereich ist in einem ersten Bereich mit der ersten Vorwärtsfahrübersetzung 25 sowie einem zweiten Vorwärtsfahrbereich mit der zweiten Vorwärtsfahrübersetzung 26 abgebildet. Diese beiden Bereiche 25 und 26 sind so ausgelegt, daß sie sich in einem Überschneidungsbereich 27 überlappen, d. h., es läßt sich ein "City-Bereich" und ein "Überland-Bereich" verwirklichen.

Die Umschaltung erfolgt erfindungsgemäß als Gruppen-Lastschaltung, wobei gleichzeitig eine Stufenschaltung in dem mehrstufigen Schaltgetriebe und eine Übersetzungsverstellung des Variators erfolgt. Dies ergibt zwar einen Momenteneinbruch bei der Schaltung, aber es ergibt sich keine Veränderung der Gesamtübersetzung i_ges, d. h., die Motordrehzahl verändert sich nicht. Dies wird dadurch ersichtlich, daß die Gesamtübersetzung i_ges in dem Schaltpunkt 28 des ersten Vorwärtsfahrbereichs 25 identisch ist mit der nach der Schaltung eingestellten Übersetzung i_ges im Schaltpunkt 29 des zweiten Vorwärtsfahrbereichs.

### Bezugszeichen

- 1.: Fahrzeuggetriebe, stufenlos
- 2.: Variator/Umschlingungsgetriebe
- 3.: Variator/Reibradgetriebe, zweizügig
- 4.: Schaltgetriebe, mehrstufig
- 5.: Eingangswelle
- 6.: Ausgangswelle
- 7.: Eingangswelle
- 8.: Ausgangswelle
- 9.: Achsdifferential
- 10.: Ritzel
- 11.: Rad
- 12.: Stirnradstufe
- 13.: Eingangswelle
- 14.: Radachse
- 15.: Radachse
- 16.: Eingangswelle
- 17.: Reibradeinheit
- 18.: Reibradeinheit
- 19.: Stirnrad
- 20.: Stirnrad
- 21.: Ausgangswelle
- 22.: Stirnradstufe
- 23.: Variator/Reibradgetriebe, einzügig
- 24.: Rückwärtsübersetzung
- 25.: erste Vorwärts-Übersetzung
- 26.: zweite Vorwärts-Übersetzung
- 27.: Überschneidungsbereich
- 28.: Schaltpunkt
- 29.: Schaltpunkt

## Patentansprüche

1. Stufenlos verstellbares Fahrzeuggetriebe (1), mit einem Variator (2, 3, 23), beispielsweise einem Reibradgetriebe oder einem Kegelscheiben-Umschlingungsgetriebe, zur stufenlosen Übersetzungsverstellung und einem mehrstufigen Schaltgetriebe (4) mit mindestens einer Eingangs- (7) und einer Ausgangswelle (8) und mit mindestens zwei Vorwärtsgängen und mit mindestens einem Rückwärtsgang, **dadurch gekennzeichnet, daß** in dem mehrstufigen Schaltgetriebe (4) durch die mindestens zwei Vorwärtsgänge zwischen der Eingangs- (7) und der Ausgangswelle (8) eine Drehrichtungsumkehr erfolgt und der mindestens eine Rückwärtsgang ohne Drehrichtungsumkehr zwischen der Eingangs-(7) und der Ausgangswelle (8) ausgebildet ist.

2. Stufenlos verstellbares Fahrzeuggetriebe nach Anspruch 1, **dadurch gekennzeichnet, daß** als Variator insbesondere ein Kegelscheiben-Umschlingungsgestriebe (2) oder ein zweizügiges Reibradgetriebe (3) vorgesehen ist, wobei die Variator-Eingangs- (5, 16) und - Ausgangswelle (6, 21) dieselbe Drehrichtung aufweisen und daß dem mehrstufigen Schaltgetriebe (4) eine Vorrichtung zur Drehrichtungsumkehr, beispielsweise eine Stirnradstufe (12), insbesondere mit einer Drehzahlübersetzung, nachgeschaltet ist.

3. Stufenlos verstellbares Fahrzeuggetriebe nach Anspruch 2, **dadurch gekennzeichnet, daß** die Wellen (5, 6) des Variators (2, 3) und die Wellen (16, 21)des mehrstufigen Schaltgetriebes (4) parallel nebeneinander angeordnet sind.

4. Stufenlos verstellbares Fahrzeuggetriebe nach Anspruch 1, **dadurch gekennzeichnet, daß** der Variator insbesondere als einzügiges Reibradgetriebe (23) ausgebildet ist und in dem Variator (23) zwischen der Eingangs- (5) und der Ausgangswelle (6) eine Drehrichtungsumkehr erfolgt.

5. Stufenlos verstellbares Fahrzeuggetriebe nach Anspruch 4, **dadurch gekennzeichnet, daß** die Wellen (5, 6) des Variators (23) und die Wellen (7, 8) des mehrstufigen Schaltgetriebes (4) koaxial hintereinander angeordnet sind.

6. Stufenlos verstellbares Fahrzeuggetriebe nach einem der vorangehenden Ansprüche, **dadurch gekennzeichnet, daß** die Eingangs- (7) und Ausgangswellen (8) des Schaltgetriebes (4) koaxial zueinander und einoder beidseitig des Gehäuses des Schaltgetriebes (4) angeordnet sind.

7. Stufenlos verstellbares Fahrzeuggetriebe nach einem der vorangehenden Ansprüche, **dadurch gekennzeichnet, daß** das mehrstufige Schaltgetriebe (4) als Planetengetriebe ausgebildet ist.

8. Stufenlos verstellbares Fahrzeuggetriebe nach einem der vorangehenden Ansprüche, **dadurch gekennzeichnet, daß** eine Schaltkupplung des mehrstufigen Schaltgetriebes (4) als Anfahrkupplung ausgebildet ist.

9. Stufenlos verstellbares Fahrzeuggetriebe nach einem der vorangehenden Ansprüche, **dadurch gekennzeichnet, daß** das mehrstufige Schaltgetriebe (4) lastschaltbar ausgebildet ist.

10. Stufenlos verstellbares Fahrzeuggetriebe nach einem der vorangehenden Ansprüche, **dadurch gekennzeichnet, daß** das Übersetzungsverhältnis (i_RW) des Rückwärtsgangs ungleich eins ist und insbesondere ca. drei beträgt.

11. Stufenlos verstellbares Fahrzeuggetriebe nach einem der vorangehenden Ansprüche, **dadurch gekennzeichnet, daß** zwei Vorwärts-Fahrbereiche schaltbar sind und diese einen Überschneidungsbereich (27) aufweisen.

12. Stufenlos verstellbares Fahrzeuggetriebe nach Anspruch 11, **dadurch gekennzeichnet, daß** ein Wechsel des Fahrbereichs als Gruppenschaltung ausführbar ist, wobei gleichzeitig eine Stufenschaltung im mehrstufigen Schaltgetriebe (4) und eine Übersetzungsverstellung des Variators (2, 3, 23) erfolgt.

## Claims

1. Continuously variable vehicle transmission (1), comprising a variator (2, 3, 23), e.g. a toroidal drive or a V-pulley belt drive, for continuous speed ratio variation and a multi-step shift transmission (4) having at least one input shaft (7) and one output shaft (8) and having at least two forward gears and having at least one reverse gear, **characterized in that** in the multi-step shift transmission (4) between the input shaft (7) and the output shaft (8) a reversal of the direction of rotation is effected by means of the at least two forward gears and the at least one reverse gear is formed without a reversal of the direction of rotation between the input shaft (7) and the output shaft (8).

2. Continuously variable vehicle transmission according to claim 1, **characterized in that** as a variator in particular a V-pulley belt drive (2) or a double-pulley toroidal drive (3) is provided, wherein the variator input shaft (5, 16) and variator output shaft (6, 21) have the same direction of rotation and that disposed downstream of the multi-step shift ' transmission (4) is a device for reversing the direction of rotation, e.g. a spur gear stage (12), in particular with speed transformation.

3. Continuously variable vehicle transmission according to claim 2, **characterized in that** the shafts (5, 6) of the variator (2, 3) and the shafts (16, 21) of the multi-step shift transmission (4) are disposed parallel and adjacent to one another.

4. Continuously variable vehicle transmission according to claim 1, **characterized in that** the variator is designed in particular as a single-pulley toroidal. drive (23) and in the variator (23) between the input shaft (5) and the output shaft (6) a reversal of the direction of rotation is effected.

5. Continuously variable vehicle transmission according to claim 4, **characterized in that** the shafts (5, 6) of the variator (23) and the shafts (7, 8) of the multi-step shift transmission (4) are disposed coaxially in series.

6. Continuously variable vehicle transmission according to one of the preceding claims, **characterized in that** the input shaft (7) and the output shaft (8) of the shift transmission (4) are disposed coaxially with one another and at one or both sides of the housing of the shift transmission (4).

7. Continuously variable vehicle transmission according to one of the preceding claims, **characterized in that** the multi-step shift transmission (4) is designed as a planetary gear.

8. Continuously variable vehicle transmission according to one of the preceding claims, **characterized in that** a shift clutch of the multi-step shift transmission (4) is designed as a main clutch.

9. Continuously variable vehicle transmission according to one of the preceding claims, **characterized in that** the multi-step shift transmission (4) is shiftable under load.

10. Continuously variable vehicle transmission according to one of the preceding claims, **characterized in that** the transmission ratio (i_RW) of the reverse gear is not equal to one and is in particular ca. three.

11. Continuously variable vehicle transmission according to one of the preceding claims, **characterized in that** two forward driving ranges are selectable and said ranges have an overlap range (27).

12. Continuously variable vehicle transmission according to claim 11, **characterized in that** a change of the driving range is effectable as a group shift, wherein there is simultaneously a step shift in the multi-step shift transmission (4) and a speed ratio variation of the variator (2, 3, 23).

## Revendications

1. Transmission de véhicule réglable en continu (1) comprenant un variateur (2, 3, 23), par exemple un engrenage à roues de friction ou une transmission à courroie à poulies coniques, pour le réglage sans palier du rapport de transmission et une transmission à rapports étagés (4) qui comprend au moins un arbre d'entrée (7) et un arbre de sortie (8) et possède au moins deux vitesses de marche avant et au moins une vitesse de marche arrière, **caractérisée en ce que**, dans la transmission à rapports étagés (4), une inversion du sens de rotation entre l'arbre d'entrée (7) et l'arbre de sortie (8) est obtenue par les au moins deux vitesses de marche avant, et la au moins une vitesse de marche arrière est réalisée sans inversion du sens de rotation entre l'arbre d'entrée (7) et l'arbre de sortie (8).

2. Transmission de véhicule réglable en continu selon la revendication 1, **caractérisée en ce qu'**il est prévu en particulier comme variateur une transmission à courroie à poulies coniques (2) ou un engrenage à roues de friction double (3), l'arbre d'entrée (5, 16) et l'arbre de sortie (6, 21) du variateur présentant le même sens de rotation, et **en ce qu'**un dispositif pour l'inversion du sens de rotation, par exemple, un étage de roues dentées droites (12), comportant en particulier une multiplication du nombre de tours, est placé en aval de la transmission à rapports étagés (4).

3. Transmission de véhicule réglable en continu selon la revendication 2, **caractérisée en ce que** les arbres (5, 6) du variateur (2, 3) et les arbres (16, 21) de la transmission à rapports étagés (4) sont disposés parallèlement l'un à côté de l'autre.

4. Transmission de véhicule réglable en continu selon la revendication 1, **caractérisée en ce que** le variateur est constitué en particulier par un engrenage à roues de friction simple (23) et, dans le variateur (23), il se produit une inversion du sens de rotation entre l'arbre d'entrée (5) et l'arbre de sortie (6).

5. Transmission de véhicule réglable en continu selon la revendication 4, **caractérisée en ce que** les arbres (5, 6) du variateur (23) et les arbres (7, 8) de la transmission à rapports étagés (4) sont disposés coaxialement l'un à la suite de l'autre.

6. Transmission de véhicule réglable en continu selon l'une des revendications précédentes, **caractérisée en ce que** l'arbre d'entrée (7) et l'arbre de sortie (8) de la transmission (4) sont disposés coaxialement entre eux et sur un côté ou sur les deux côtés du carter de la transmission (4).

7. Transmission de véhicule réglable en continu selon l'une des revendications précédentes, **caractérisée en ce que** la transmission à rapports étagés (4) est constituée par une transmission épicycloïdale.

8. Transmission de véhicule réglable en continu selon l'une des revendications précédentes, **caractérisée en ce qu'**un embrayage de commutation de la transmission à rapports étagés (4) constitue un embrayage de démarrage.

9. Transmission de véhicule réglable en continu selon l'une des revendications précédentes, **caractérisée en ce que** la transmission à rapports étagés (4) est commutable sous charge.

10. Transmission de véhicule réglable en continu selon l'une des revendications précédentes **caractérisée en ce que** le rapport de transmission (i_RW) de la marche arrière est différent de un et est en particulier à peu près égal à trois.

11. Transmission de véhicule réglable en continu selon l'une des revendications précédentes, **caractérisée en ce que** deux gammes de conduite en marche avant peuvent être sélectionnées et ces gammes présentent une zone de chevauchement (27).

12. Transmission de véhicule réglable en continu selon la revendication 11, **caractérisée en ce qu'**un changement de la gamme de marche peut être réalisé sous la forme d'une commutation de groupe dans laquelle il se produit en même temps une commutation d'étage dans la transmission à rapports étagés (4) et une modification du rapport du variateur (2, 3, 23).
